# EUROPEAN PATENT APPLICATION

(11) **EP 4 803 773 A1**
(43) Date of publication of application: **09.09.2026**
(21) Application number: 24906272.0
(22) Date of filing: 13.12.2024
(51) Int. Cl.: F16D 65/06, F16D 65/14

(54) **BRAKE MECHANISM AND METHOD THEREFOR**

(30) Priority: 19.12.2023 CN 202311753916
(71) Applicant: KENGIC INTELLIGENT TECHNOLOGY CO., LTD., Qingdao, Shandong 266000 (CN)
(72) Inventor: WANG, Huanyou, Qingdao, Shandong 266000 (CN); XU, Kemiao, Qingdao, Shandong 266000 (CN); LING, Xiaodong, Qingdao, Shandong 266000 (CN)
(74) Representative: Inchingalo, Simona
(86) International application number: PCT/CN2024/139392
(87) International publication number: WO 2025/130791

(57) **Abstract**

A brake mechanism and a method therefor. The brake mechanism comprises: a brake support, fixedly connected to a moving part; a brake wheel shaft and a rotating shaft, disposed on a swing arm along a vertical shaft, one side end of the swing arm being fixedly connected to the brake support by means of the rotating shaft. An electromagnetic clutch and a brake wheel are each sleeved on the brake wheel shaft. The present invention differs from the prior art in that a spring and a brake wheel are located on the same side of a rotating shaft, and the spring is located at a position distant from the other side end of the rotating shaft relative to the brake wheel. A spring force application position and the brake wheel are disposed on the same side of the rotating shaft, and limiting and auxiliary positioning parts are disposed on one side of a guide rail. Thus the objectives of improving brake pressure, effectively maintaining guide rail straightness, and adjusting a gap between the guide rail and the brake wheel can be achieved.

## Description

### Cross-Reference to Related Application

The present invention claims the priority of Chinese Patent Application 202311753916X, filed in the China Patent Office on December 19, 2023, and the entire contents of which are herein incorporated by reference.

### Technical Field

The present invention relates to a novel mechanism applied to a high-speed motion apparatus to achieve rapid smooth braking and a method thereof, and belongs to the fields of logistics storage and mechanical design.

### Background

At present, there are numerous solutions for safe braking of various automated motion apparatuses (e.g., stacking machines commonly used in the logistics storage industry for goods retrieval and placement in stereoscopic warehouses). When a device changes from a high-speed operating state to a braking stop state, due to the action of the inertial force of the device per se, although a driving component has stopped operating, the upper part of a moving component needs to swing several times to stably stop due to factors such as an excessive height and/or weight of the moving component, which makes it difficult to achieve rapid braking response and precise positioning, thereby not only affecting the operating efficiency of the moving component, but also having certain safety risks.

In order to solve the problem of controlling the braking efficiency and the stopping accuracy of such moving components, there are various design solutions in the related art, for example, a previously disclosed domestic patent CN201720375919.8 entitled an auxiliary positioning mechanism of a stacking machine is described below. The auxiliary positioning mechanism includes a support, a push arm, a main shaft, a brake wheel, an electromagnetic brake unit, and an elastic element in a pressed state. The relative positions of the remaining components are fixed by the support, so that the push arm is rotatable, and the main shaft, the brake wheel and the electromagnetic brake unit are located at one end of the push arm, and the elastic element is located at the other end of the push arm. Since an outer edge of the brake wheel is always tightly pressed on one side of an upper rail under the action of an elastic force of the elastic element, the overall sway of the stacking machine during use may be reduced, thereby improving the operation stability of the stacking machine. Meanwhile, in the case of normal operation of the stacking machine, the electromagnetic brake unit is powered off, when the stacking machine requests positioning, the electromagnetic brake unit is powered on, and after being powered on, the electromagnetic brake unit has magnetism and thus adsorbs the push arm, such that the brake wheel cannot rotate, and thus performs sliding friction with the upper rail to perform auxiliary positioning.

In the related art, the brake wheel and the electromagnetic brake unit are located at one end of the push arm, the elastic element is located at the other end of the push arm, at two ends of a formed lever, the ratio of the arm of force for force application of the spring to the arm of force of the brake wheel and the ratio of the elastic force of the spring to the pressure of the brake wheel are 1:1, therefore in the case of a constant elastic force of the spring, the pressure of the brake wheel is only the same one-fold value. In this way, the braking effect is limited by an elastic coefficient of the spring and cannot be applied to braking in large-load and high-speed operating states, and thus the braking performance is at a lower level; on the other hand, the related art lacks guide rail protection measures after the wear of the brake wheel, on the premise of serious wear of the brake wheel, the guide rail is easily damaged by the friction with a brake wheel shaft, therefore it is necessary to frequently check the wear situation, and since the distance of the guide rail is long, the maintenance and replacement costs are high. The original structure cannot effectively protect the guide rail from wear, which is not conducive to controlling the costs of the components and prolonging the maintenance time. In addition, the guide rail in the related art lacks an auxiliary positioning apparatus, the guide rail is easy to deform after being subjected to the pressure of the brake wheel, such that the gap increases to exceed an elastic deformation critical value of the spring, the straightness of the guide rail is reduced, and the stability and braking effect of the moving component are affected.

### Summary

In order to solve the problems in the related art, in the brake mechanism and method therefor of the present invention, the force application position of a spring and a brake wheel are disposed on a same side of a rotating shaft, and meanwhile limiting and auxiliary positioning components are additionally disposed on one side of a guide rail, so as to achieve the design objectives of improving a brake pressure multiple times, effectively maintaining the straightness of the guide rail, and adjusting a gap between the guide rail and the brake wheel.

In order to achieve the above design objectives, the brake mechanism includes a brake bracket fixedly connected to the moving component, a brake wheel shaft and a rotating shaft are disposed on a swing arm along a vertical axis, one side end of the swing arm is fixedly connected with the brake bracket by the rotating shaft, and an electromagnetic clutch and a brake wheel are respectively sleeved on the brake wheel shaft. The difference with the related art lies in that a spring and the brake wheel are located on a same side of the rotating shaft, and the spring is located at a position away from another side end of the rotating shaft relative to the brake wheel.

In one embodiment, the brake wheel is sleeved on the brake wheel shaft by a brake wheel bearing, a fixed end of the electromagnetic clutch is connected into a whole with the brake wheel shaft by a connection flat key, and a free end of the electromagnetic clutch is connected into a whole with the brake wheel.

In one embodiment, a limiting screw is connected with the swing arm in a penetrating manner between the spring and the brake wheel, the limiting screw is sleeved with a group of nuts respectively on two sides of the swing arm, and the two groups of nuts maintain gaps with the swing arm.

In one embodiment, an auxiliary roller is disposed on the brake bracket relative to another side of an operation guide rail of the brake wheel by means of a rotating shaft bearing, and the auxiliary roller is in rolling contact with the operation guide rail.

In one embodiment, the auxiliary roller is preferably made of an MC nylon material.

In one embodiment, the brake wheel is preferably made of a polyurethane material.

In one embodiment, a rated torque of the electromagnetic clutch is greater than a maximum torque M1 generated by a static friction force between the brake wheel and the guide rail, M1=F3 × R1; and in the formula, R1 is a radius of the brake wheel, and F3 is a friction force applied by the brake wheel to the operation guide rail.

Based on the above improvements to the structure of the brake mechanism, the present invention provides the following braking method at the same time:
the brake bracket is fixedly connected to the moving component, the brake wheel shaft and the rotating shaft are disposed on the swing arm along the vertical axis, one side end of the swing arm is fixedly connected with the brake bracket by the rotating shaft, and the electromagnetic clutch and the brake wheel are respectively sleeved on the brake wheel shaft; the spring and the brake wheel are located on the same side of the rotating shaft, and the spring is located at a position away from the another side end of the rotating shaft relative to the brake wheel; in a powered off state, the fixed end and the free end of the electromagnetic clutch are separated, and the spring presses the swing arm, so that the brake wheel is in rolling contact with the operation guide rail; and in a powered on state, the fixed end and the free end of the electromagnetic clutch are engaged, at this time, the free end of the electromagnetic clutch is braked, and the brake wheel performs braking accordingly.

In one embodiment, a limiting screw is connected with the swing arm in a penetrating manner between the spring and the brake wheel, the limiting screw is sleeved with a group of nuts respectively on two sides of the swing arm, and the two groups of nuts maintain gaps with the swing arm.

In one embodiment, the auxiliary roller freely rotates along a surface of the operation guide rail, and when the spring presses the swing arm, so that the brake wheel is in rolling contact with the operation guide rail, the auxiliary roller and the brake wheel tightly hold the operation guide rail together from two sides.

In summary, the brake mechanism and method therefor in the present invention have the following advantages:
1. In the present invention, the force application position of the spring and the brake wheel are disposed on a same side of the rotating shaft, and the force application position of the spring is away from the rotating shaft, thereby significantly improving the arm of force for force application of the spring; in a case where the same elastic force is used, the brake pressure generated by the brake wheel in the present invention may be improved by several times, so that the stop time of the moving component is significantly reduced, and the operating efficiency and braking effect of the moving component are correspondingly improved on the premise of being applicable to large-load and the high-speed motion states.
2. The present invention may improve the stop accuracy of the moving component, and ensure that the moving component maintains a relatively high stable state during high-speed motion.
3. A deformable gap of a preset guide rail of the limiting screw is used in the present invention to effectively avoid damage to the brake wheel of which the guide rail is excessively worn, thereby being beneficial to dynamically improving the efficiency of maintaining and guaranteeing the device.
4. The auxiliary roller and the brake wheel are used in cooperation in the present invention, thereby not only helping to ensure that the brake wheel is always in contact with the guide rail, but also outputting a stable friction force to correspondingly achieve accurate braking.

### Brief Description of the Drawings

The present invention is further described in conjunction with the following drawings.
Fig. 1 is a schematic structural diagram of a brake mechanism according to the present invention;
Figs. 2 and 3 are side views of the structure as shown in Fig. 1 at different angles;

in the above drawings, 1, brake bracket; 2, spring fixing rod; 3, brake wheel shaft; 4, rotating shaft; 5, auxiliary roller; 6, electromagnetic clutch; 7, brake wheel; 8, moving component; 9, operation guide rail; 10, spring; 11, swing arm; 12, connecting flat key; 13, brake wheel bearing; 14, rotating shaft bearing; 15, baffle; 16, limiting screw; and

L1 is a center distance between the brake wheel 7 and the rotating shaft 4, L2 is a distance from the center of the spring 10 to the center of the rotating shaft 4, R1 is a radius of the brake wheel 7, F1 is an elastic force of the spring 10, F2 is a positive pressure of the brake wheel 7, F3 is a friction force by the brake wheel 7 applied to the operation guide rail 9, and F4 is a positive pressure provided by the auxiliary roller 5 to the operation guide rail 9.

### Detailed Description of the Embodiments

### Embodiment 1

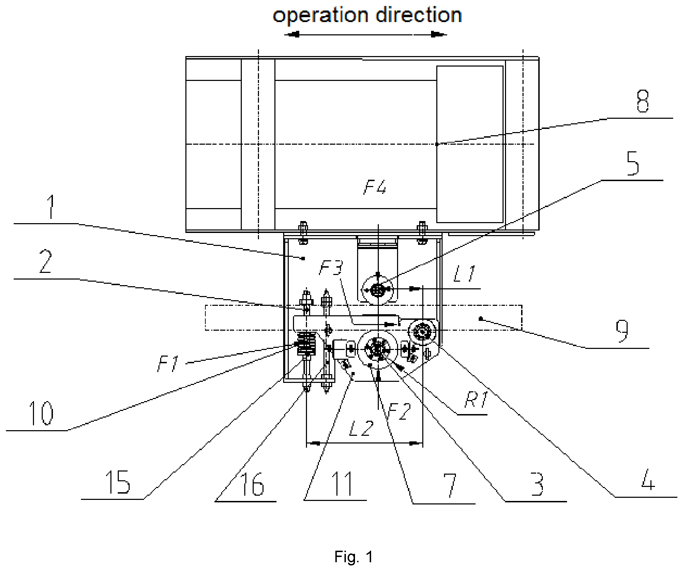

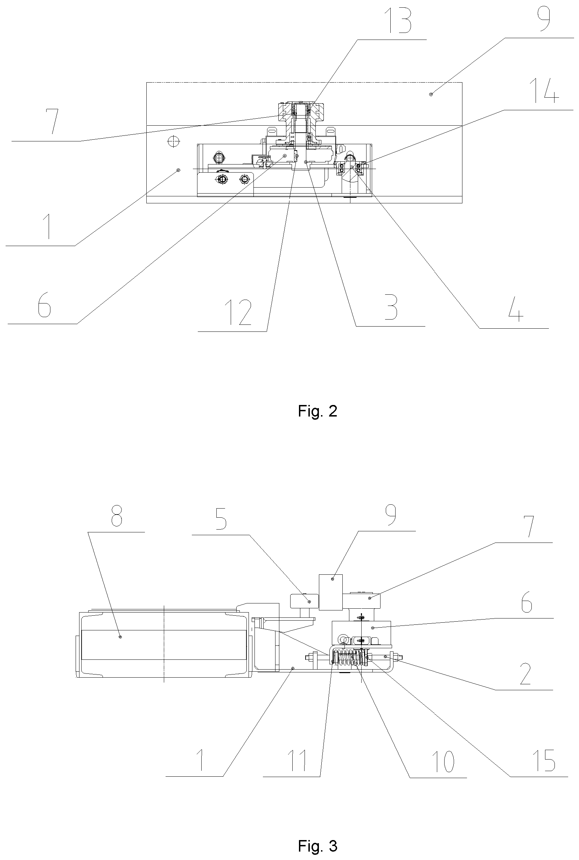

As shown in Fig. 1 to Fig. 3, the present invention provides a novel brake mechanism, including a brake bracket 1 fixedly connected to a moving component 8, wherein the entire brake mechanism may move at a high speed along an operation guide rail 9 along with the moving component 8 by means of the brake bracket 1; a brake wheel shaft 3 and a rotating shaft 4 are disposed on a swing arm 11 along a vertical axis, and one side end of the swing arm 11 is fixedly connected with the brake bracket 1 by the rotating shaft 4; an electromagnetic clutch 6 and a brake wheel 7 are respectively sleeved on the brake wheel shaft 3, and specifically, the brake wheel 7 is sleeved on the brake wheel shaft 3 by a brake wheel bearing 13; and a fixed end of the electromagnetic clutch 6 is connected into a whole with the brake wheel shaft 3 by a connection flat key 12, and a free end of the electromagnetic clutch 6 is connected into a whole with the brake wheel 7.

In a powered off state, a fixed end and a free end of the electromagnetic clutch 6 are separated, and the brake wheel 7 freely rotates on the brake wheel shaft 3 by the brake wheel bearing 13; the swing arm 11 and the brake wheel shaft 3 are integrated, and the swing arm 11 is pressed by a spring 10, so that the brake wheel 7 is in rolling contact with the operation guide rail 9; and in a powered on state, the fixed end and the free end of the electromagnetic clutch 6 are engaged, at this time, the free end of the electromagnetic clutch 6 is braked, and the brake wheel 7 performs braking accordingly.

The spring 10 and the brake wheel 7 are located on a same side of the rotating shaft 4, and the spring 10 is located at a position away from another side end of the rotating shaft 4 relative to the brake wheel 7; and compared with the related art, the force application position of the spring 10 and the brake wheel 7 are both disposed on a same side of the rotating shaft 4, and the force application position of the spring 10 is away from the rotating shaft 4, thereby effectively prolonging the arm of force for force application of the spring, in the case of the same elastic force, the pressure generated by the brake wheel 7 in the present invention on the operation guide rail 9 may be improved by several times, so that the braking effect is relatively prominent.

Specifically, a spring fixing rod 2 is fixed to the swing arm 11 in a penetrating manner, and the spring 10 is sleeved on the spring fixing rod 2; and on the spring fixing rod 2, one end of the spring 10 abuts against a nut and a baffle 15, the other end of the spring 10 abuts against the swing arm 11, and the spring 10 is pressed to realize the rolling contact between the brake wheel 7 and the operation guide rail 9.

In one embodiment, a limiting screw 16 is connected with the swing arm 11 in a penetrating manner between the spring 10 and the brake wheel 7, the limiting screw 16 is sleeved with a group of nuts respectively on the two sides of the swing arm 11, and the two groups of nuts maintain gaps with the swing arm 11.

A safe limiting gap formed by the two groups of nuts on the limiting screw 16 does not a normal braking effect, and meanwhile, may ensure that the brake wheel shaft 3 is not in contact with the operation guide rail 9 to damage the same when the brake wheel 7 is seriously worn due to long-time use.

In one embodiment, an auxiliary roller 5 is disposed on the brake bracket 1 relative to the other side of the operation guide rail 9 of the brake wheel 7 by means of a rotating shaft bearing 14, and the auxiliary roller 5 is in rolling contact with the operation guide rail 9.

The auxiliary roller 5 rotates freely along the surface of the operation guide rail 9, when the spring 10 presses the swing arm 11, so that the brake wheel 7 is in rolling contact with the operation guide rail 9, the auxiliary roller 5 and the brake wheel 7 tightly hold the operation guide rail 9 together from the two sides, thereby not only maintaining the straightness of the operation guide rail 9, but also ensuring that the moving component 8 is always in contact with the operation guide rail 9.

During braking, depending on the limiting of the auxiliary roller 5, an acting force between the brake wheel 7 and the operation guide rail 9 is static friction resistance. It is well known that in the case of the same positive pressure and the same material, the static friction resistance is much greater than rolling friction resistance. The friction force between the brake wheel 7 and the operation guide rail 9 increases instantaneously, thereby realizing emergency precise braking of the moving component 8, and meanwhile reducing the sway of the moving component 8 during moving.

The operation guide rail 9 generates certain elastic deformation after being subjected to the pressure of the brake wheel 7, on one hand, the straightness of the operation guide rail 9 is reduced due to long-time use to affect the stability of the moving component 8, and on the other hand, the elastic force of the spring 10 is reduced, and the pressure of the brake wheel 7 is correspondingly reduced to affect the braking effect. Compared with the related art, in the present invention, the auxiliary roller 5 may ensure the stress balance of the operation guide rail 9, and ensure the stable stress of the brake wheel 7 at the same time, so that the braking effect is relatively obvious.

In one embodiment, in view of reducing the friction between the auxiliary roller 5 and the operation guide rail 9 and protecting the guide rail, the auxiliary roller 5 is made of a material having a smaller friction coefficient, for example, MC nylon.

As shown in Fig. 1, in order to prove that the present invention has the advantage of increasing the brake pressure, the following braking force calculation is performed by using the characteristics of the brake mechanism: a positive pressure F2 applied by the brake wheel 7 to the guide rail is: F2=F1 * L2 ÷ L1, wherein the brake wheel 7 may be made of a material having a large friction coefficient, for example, polyurethane, the friction coefficient thereof is set to be u, the value of u is 0.6, and then a friction force applied by the brake wheel 7 to the guide rail is F3=F2 × 0.6.

When the electromagnetic clutch 6 is selected, the static friction of the brake wheel 7 should be considered. Therefore, a torque generated by the static friction does not exceed a brake torque of the electromagnetic clutch 6, a maximum torque that may be provided by the brake wheel 7 is M1 = F3 × R1, that is, a rated torque of the electromagnetic clutch 6 needs to be greater than M1, and then a fast and precise braking effect may be achieved.

Based on the above structural improvements of the brake mechanism, the present invention implements the following braking method at the same time:
the brake bracket 1 is fixedly connected to the moving component 8, the brake wheel shaft 3 and the rotating shaft 4 are disposed on the swing arm 11 along the vertical axis, one side end of the swing arm 11 is fixedly connected with the brake bracket 1 by the rotating shaft 4, and the electromagnetic clutch 6 and the brake wheel 7 are respectively sleeved on the brake wheel shaft 3; the spring 10 and the brake wheel 7 are located on the same side of the rotating shaft 4, and the spring 10 is located at a position away from the other side end of the rotating shaft 4 relative to the brake wheel 7; in a powered off state, the fixed end and the free end of the electromagnetic clutch 6 are separated, and the spring 10 presses the swing arm 11, so that the brake wheel 7 is in rolling contact with an operation guide rail 9; and in a powered on state, the fixed end and the free end of the electromagnetic clutch 6 are engaged, at this time, the free end of the electromagnetic clutch 6 is braked, and the brake wheel 7 performs braking accordingly.

In one embodiment, a limiting screw 16 is connected with the swing arm 11 in a penetrating manner between the spring 10 and the brake wheel 7, the limiting screw 16 is sleeved with a group of nuts respectively on the two sides of the swing arm 11, and the two groups of nuts maintain gaps with the swing arm 11.

In one embodiment, an auxiliary roller 5 is disposed on the brake bracket 1 relative to the other side of the operation guide rail 9 of the brake wheel 7 by means of a rotating shaft bearing 14, and the auxiliary roller 5 is in rolling contact with the operation guide rail 9.

The auxiliary roller 5 rotates freely along the surface of the operation guide rail 9, when the spring 10 presses the swing arm 11, so that the brake wheel 7 is in rolling contact with the operation guide rail 9, the auxiliary roller 5 and the brake wheel 7 tightly hold the operation guide rail 9 together from the two sides, thereby not only maintaining the straightness of the operation guide rail 9, but also ensuring that the moving component 8 is always in contact with the operation guide rail 9.

In one embodiment, the auxiliary roller 5 is made of a material having a smaller friction coefficient, for example, MC nylon.

In one embodiment, the brake wheel 7 may be made of a material having a large friction coefficient, for example, polyurethane,

In one embodiment, a rated torque of the electromagnetic clutch 6 is greater than a maximum torque M1 generated by a static friction force between the brake wheel 7 and the guide rail, M1=F3 × R1, in the formula, R1 is the radius of the brake wheel 7, and F3 is a friction force applied by the brake wheel 7 to the operation guide rail 9.

The above content, in combination with the embodiments given in the drawings, is only a preferred solution for implementing the objectives of the present invention. Those skilled in the art to which the present invention belongs may be motivated accordingly to directly derive other alternative structures consistent with the design concepts of the present invention. The other structural features thus obtained should also fall within the scope of the solutions described in the present invention.

## Claims

1. A brake mechanism, comprising:
a brake bracket, fixedly connected to a moving component;
a swing arm;
a brake wheel shaft;
a rotating shaft, wherein the brake wheel shaft and the rotating shaft are disposed on the swing arm along a vertical axis, and one side end of the swing arm is fixedly connected with the brake bracket by the rotating shaft;
an electromagnetic clutch;
a brake wheel, wherein the electromagnetic clutch and the brake wheel are respectively sleeved on the brake wheel shaft; and
a spring, wherein the spring and the brake wheel are located on a same side of the rotating shaft, and the spring is located at a position away from another side end of the rotating shaft relative to the brake wheel.

2. The brake mechanism according to claim 1, wherein the brake mechanism further comprises:
a brake wheel bearing, wherein the brake wheel is sleeved on the brake wheel shaft by the brake wheel bearing; and
a connection flat key, wherein a fixed end of the electromagnetic clutch is connected into a whole with the brake wheel shaft by the connection flat key, and a free end of the electromagnetic clutch is connected into a whole with the brake wheel.

3. The brake mechanism according to claim 1, wherein the brake mechanism further comprises:
a limiting screw, wherein the limiting screw is connected with the swing arm in a penetrating manner between the spring and the brake wheel; and
nuts, wherein the limiting screw is sleeved with a group of nuts respectively on two sides of the swing arm, and the two groups of nuts maintain gaps with the swing arm.

4. The brake mechanism according to claim 1 or 3, wherein the brake mechanism further comprises:
a rotating shaft bearing;
an auxiliary roller, wherein the auxiliary roller is disposed on the brake bracket relative to another side of an operation guide rail of the brake wheel by means of the rotating shaft bearing, and the auxiliary roller is in rolling contact with the operation guide rail.

5. The brake mechanism according to claim 4, wherein the auxiliary roller is made of an MC nylon material.

6. The brake mechanism according to claim 4, wherein the brake wheel is made of a polyurethane material.

7. The brake mechanism according to claim 4, wherein a rated torque of the electromagnetic clutch is greater than a maximum torque M1 generated by a static friction force between the brake wheel and the guide rail, M1=F3 × R1; and
in the formula, R1 is a radius of the brake wheel, and F3 is a friction force applied by the brake wheel to the operation guide rail.

8. A braking method applying the brake mechanism according to any of claims 1-7, wherein the brake bracket is fixedly connected to the moving component, the brake wheel shaft and the rotating shaft are disposed on the swing arm along the vertical axis, one side end of the swing arm is fixedly connected with the brake bracket by the rotating shaft, and the electromagnetic clutch and the brake wheel are respectively sleeved on the brake wheel shaft;
the spring and the brake wheel are located on the same side of the rotating shaft, and the spring is located at a position away from the another side end of the rotating shaft relative to the brake wheel; and
in a powered off state, a fixed end and a free end of the electromagnetic clutch are separated, and the spring presses the swing arm, so that the brake wheel is in rolling contact with an operation guide rail; and in a powered on state, the fixed end and the free end of the electromagnetic clutch are engaged, at this time, the free end of the electromagnetic clutch is braked, and the brake wheel performs braking accordingly.

9. The braking method according to claim 8, wherein a limiting screw is connected with the swing arm in a penetrating manner between the spring and the brake wheel, the limiting screw is sleeved with a group of nuts respectively on two sides of the swing arm, and the two groups of nuts maintain gaps with the swing arm.

10. The braking method according to claim 8, wherein an auxiliary roller freely rotates along a surface of the operation guide rail, and when the spring presses the swing arm, so that the brake wheel is in rolling contact with the operation guide rail, the auxiliary roller and the brake wheel tightly hold the operation guide rail together from two sides.
